# EUROPEAN PATENT SPECIFICATION

(11) **EP 1 795 433 B1**
(45) Date of publication and mention of the grant of the patent: **08.10.2008**
(21) Application number: 06125267.2
(22) Date of filing: 01.12.2006
(51) Int. Cl.: B62D 7/15, B62D 15/02

(54) **A steering system for a vehicle**
Fahrzeuglenksystem
Système de direction pour véhicule

(30) Priority: 09.12.2005 US 275101
(43) Date of publication of application: 13.06.2007
(73) Proprietor: Ford Global Technologies, LLC, Dearborn, MI 48126 (US)
(72) Inventor: Jonasson, Mats, 43349 Partille (SE); Zetterstr, Sigvard, 421 36 Västra Frölunda (SE)
(74) Representative: Messulam, Alec Moses

(56) References cited:
- DE-A1- 3 941 464
- DE-A1- 4 334 279
- US-B2- 6 386 553

## Description

The present invention relates to steering for passenger vehicles and in particular to the steering of front and rear wheels of passenger vehicles.

The prior art provides passenger vehicles having four or more wheels for transporting the vehicle. Typically, two of the wheels are driven, such as the front wheels or the rear wheels. Typically, the front wheels are rotationally translatable as a result of a steering direction indicated by a driver of the vehicle.

The prior art has provided passenger vehicles having front and rear steerable wheels, wherein the rear wheels are actuated to an opposite steering angle of the front wheels for minimizing a turn radius of the vehicle. Four wheel steering enhances low speed manoeuvrability, such as that experienced while parking.

The prior art has also provided vehicles having steerable front wheels and steerable rear wheels for parallel steering of the vehicle. An aspect of such prior art parallel steering requires the driver to concurrently control conventional steering and parallel steering of the vehicle.

One prior art vehicle had four wheel steering with a rear wheel steering rack connected to a front wheel steering rack via gears and mechanical shafts. The rear wheels turned the same way as the front wheels at small steering angles for enhanced high speed stability. At greater front wheel steering angles, the rear wheels returned back to a zero steering angle; and at even greater front wheel steering angles, the rear wheels turned to angles opposite of the front wheels to reduce a turning radius of the vehicle. Thus, the driver did not activate a steering mode and no intervention from the driver was required to select or activate a steering mode.

US 6,396,553 discloses a steering system as set forth in the preamble of Claim 1 of the appended claims. In particular, it describes a steering system for parallel steering of the front and rear wheels of a passenger vehicle which comprises a steering mechanism mounted in a passenger vehicle for receiving manual rotation, a sensor cooperating with the steering mechanism for measuring an angular orientation of the steering mechanism, a controller in communication with the sensor for receiving an input from the sensor indicative of the steering mechanism angular orientation, a front wheel steering actuator in communication with the controller for receiving a steering angle output from the controller for actuating the vehicle front wheels to a steering angle corresponding to the steering angle output and a rear wheel steering actuator in communication with the controller for receiving a steering angle output from the controller for actuating the vehicle rear wheels to a steering angle corresponding to the steering angle output for parallel steering of the vehicle and for receiving a steering angle output from the controller for actuating the vehicle rear wheels to a forward direction for non-parallel steering of the vehicle, the system further comprising a steering mode controller for selection of a parallel steering mode in which the steering angle of the vehicle rear wheels corresponds to the vehicle front wheels steering angle and a non-parallel steering mode in which the steering angle of the vehicle rear wheels are aligned with a forward direction of the vehicle.

In accordance with the present invention, such a steering system is characterised by comprising an observer having at least one of radar equipment, infrared equipment and digital image processing equipment for measuring positional data of external obstacles, which data is input to the steering mode controller for determining the steering mode.

The system may further comprise a rotational velocity sensor operably connected to the controller for measuring a rotational velocity of the vehicle used for determining the steering angle output for the front wheels and the rear wheels.

The system may further comprise a linear velocity sensor operably connected to the controller for measuring a linear velocity of the vehicle used for determining the steering angle output for the front wheels and the rear wheels.

The invention will now be described by way of example with reference to the accompanying drawing of which:-
Figure 1 is a plan schematic view of a passenger vehicle in accordance with the present invention;
Figure 2 is a plan schematic view of the passenger vehicle shown in Figure 1 showing a first steering mode;
Figure 3 is a plan schematic view of the passenger vehicle shown in Figure 1, showing an alternative steering mode;
Figure 4 is a schematic representation of a system for parallel steering of a passenger vehicle in accordance with the present invention; and
Figure 5 is a flowchart illustrating a method in accordance with the present invention.

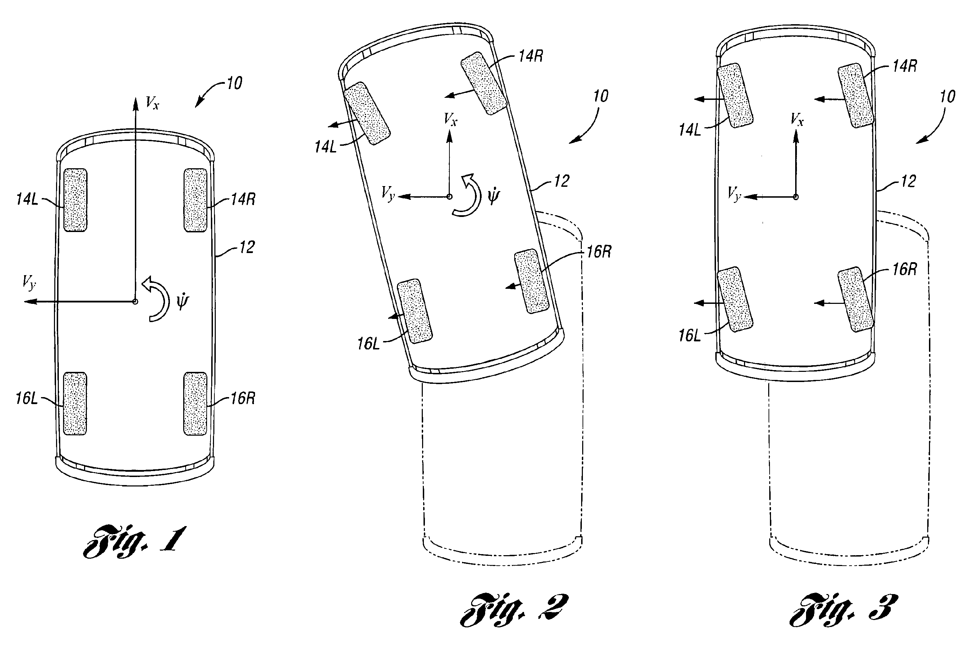

With reference now to Figure 1, an exemplary embodiment of passenger vehicle is illustrated schematically and is referenced generally by the numeral 10. The passenger vehicle 10 includes a vehicle body 12 supported upon a chassis (not shown), which is suspended upon a plurality of wheels, such as a pair of front wheels 14L, 14R and a pair of rear wheels 16L, 16R.

The front wheels 14L, 14R are each translatable relative to the body 12 for steering of the vehicle 10. Specifically, each of the front wheels 14L, 14R may be pivoted about a vertical axis for steering of the vehicle 10. The front wheels 14L, 14R may include a steering system that is interconnected for collective steering angle adjustment of the front wheels 14L, 14R. Alternatively, each of the front wheels 14L, 14R may be independently actuated for steering of the front wheels 14L, 14R. Likewise, the rear wheels 16L, 16R are steerable either collectively or independently.

For example, each of the wheels 14L, 14R, 16L, 16R may be independently steerable by steering assemblies such as those disclosed in U.S. Patent No. 6,386,553 and European Patent Application No. 1 354 731. The wheels 14L, 14R, 16L, 16R may also utilize the driving and suspension arrangements provided in the U.S. 6,386,553 patent and in the EP 1 354 731 patent application.

The vehicle 10 can be observed from a local coordinate system, such as a coordinate system that is perceived by the driver. A cornering movement of the vehicle 10 is a combination of two translations, linear translation and rotational translation. When a driver turns a steering wheel on a front wheel steer vehicle, such as vehicle 10 in a front wheel steer mode, a combined translation of both linear translation and rotational translation turns the vehicle 10 in the driver-intended direction.

When steering is utilized for cornering, the direction of travel of the vehicle is altered. Steering is also utilized for parallel movement of the vehicle 10, which refers to translation of the vehicle 10 in a driving direction Vₓ and in a direction that is not parallel with the driving direction Vₓ. In other words, the parallel translation is in a direction that is a combination of linear translation in the driving direction Vₓ and a lateral direction V_{y}. Parallel translation of the vehicle, should minimize rotational translation around a vertical axis. The magnitudes of these various translations are coupled to the geometry of the vehicle 10, tire characteristics, position of the vehicles center of gravity and inertia. Rotational translation around a vertical axis generates a yaw speed ψ̇ .

Prior art vehicles having front wheel steering only are suitable for cornering movements of the vehicle. Prior art vehicles that are steered by two wheels only cannot be successfully utilized for parallel translation and rotational translation. When parallel movements are attempted by front wheel steer vehicles, the vehicle may skid if the yaw speed ψ̇ is too high for the given situation.

Although a front portion of the prior art front wheel steer vehicle may avoid an obstacle, a rear portion of the front wheel steer vehicle may impact the same obstacle during an evasion manoeuvre. Accordingly, by providing steering to the front wheels 14L, 14R and rear wheels 16L, 16R of the vehicle 10, large lateral accelerations may be employed while minimizing vehicle yaw speed ψ̇. Such parallel movements may avoid skidding of the vehicle 10 and avoid collisions with a rear part of the vehicle and an obstacle during evasive manoeuvres. Further, the vehicle 10 provides a minimal time-lag between an input steering angle and associated output lateral acceleration.

The vehicle 10 permits selection of a desired combination of front and rear wheel steering for manoeuvrability of the vehicle 10 that is optimal for particular criteria. For example, during an evasive action, the vehicle 10 may require lateral translation in the direction V_{y} in a short period of time. A conventional front wheel steer vehicle will rotate during such evasive action. Once a yaw speed ψ̇ is generated, this inertia may result in skidding or other lost control of the vehicle, particularly in situations with poor friction between tires and ground. Accordingly, the passenger vehicle 10 with front and rear steering may minimize the amount of yaw speed ψ̇ during evasive action.

There are other situations where vehicle performance can be optimized by making steering angle adjustments to the individual wheels 14L, 14R, 16L, 16R. An exemplary situation is when an external side wind is imparted upon the vehicle body 12. Under this circumstance, a compensating side force may be exerted upon the vehicle body 12 by individual steering of the wheels 14L, 14R, 16L, 16R in order to maintain the vehicle 10 in the driving direction Vₓ.

A truly parallel orientation of all wheels 14L, 14R, 16L, 16R may not always be optimal for a given situation and therefore individual steering angle adjustment for the wheels 14L, 14R, 16L, 16R may optimize steering for the given criteria. Additionally, during evasive action, there may be situations when a rotational translation of the vehicle 10 may be required for a combination of cornering and parallel translation of the vehicle 10. This decision may be based on the driver, or the vehicle 10.

There are also situations where stability is of less of a concern and convenience is of great concern. An example is during low speed manoeuvrability, such as parking. At low speeds the transverse forces applied to the wheels 14L, 14R, 16L, 16R are minimal and of little concern. During low speed turns, a greater rate of rotational translation ψ relative to linear translation Vₓ, V_{y} is desired for optimizing convenience.

With reference now to Figure 2, the vehicle 10 is illustrated in a front wheel steering mode, similar to that of conventional front wheel steering vehicles. The vehicle 10 is illustrated with the front wheels 14L, 14R each rotated about a vertical axis for steering of the vehicle 10. During the front wheel steer mode, large lateral forces are imparted upon the front wheels 14L, 14R in comparison to the lateral loads applied upon the rear wheels 16L, 16R. The magnitude of the lateral forces are illustrated by directional arrows in Figure 2 upon each of the wheels 14L, 14R, 16L, 16R.

In Figure 2, the vehicle 10 is illustrated in solid in a cornering position during the front wheel steering mode and relative to a prior position that is illustrated in phantom. During this cornering movement, the vehicle 10 translates linearly in a vector of directions Vₓ and V_{y}, and also the vehicle 10 translates rotationally generating a yaw speed ψ about the vehicle's centre of gravity. Such steering is optimal for changing direction of the vehicle 10, such as making turns. Front wheel steering of the vehicle 10 is similar to conventional front wheel steer vehicles. However, translation of the vehicle 10 from the first orientation in phantom to the second orientation illustrated in solid may not be optimal for parallel movement. During parallel movement, generation of the yaw speed ψ generates a momentum about the centre of gravity, which must be overcome in order to straighten out the vehicle. Although a front end of the vehicle 10 may clear an obstacle, the rear end may still impact the obstacle because the rear end of the vehicle 10 does not directly translate laterally with the front end of the vehicle 10.

Accordingly, the vehicle 10 is also provided with an all wheel parallel steering mode as illustrated in Figure 3. By applying steering to both the front wheels 14L, 14R and rear wheels 16L, 16R, steering angles for the front wheels 14L, 14R and the rear wheels 16L, 16R can be chosen in order to maximize lateral acceleration and minimize yaw speed ψ of the vehicle 10. Further optimization may be provided by selecting a steering angle for each of the wheels 14L, 14R, 16L, 16R.

As illustrated in Figure 3, the vehicle 10 may translate linearly with minimal or no rotational translation. Accordingly, the lateral forces imparted to the wheels 14L, 14R, 16L, 16R may be generally equal as indicated by the magnitude of the directional arrows in Figure 3. The vehicle 10 may move a larger lateral distance than in the front wheel steering mode illustrated in Figure 2. Thus, yaw speed ψ̇ can be minimized for maximizing stability and control of the vehicle 10 and minimizing occurrences such as skidding that may detract from the driver's control of the vehicle 10. Additionally, since the rear end of the vehicle 10 translates laterally along with the front end of the vehicle 10, the entire vehicle 10 may be steered to avoid an obstacle unlike the rear end of the vehicle 10 in the cornering steering mode illustrated in Figure 2.

The steering angles of the rear wheels 16L, 16R may be similar to or the same as the angles of the front wheels 14L, 14R. However, by independent control of the rear wheels 16L, 16R, optimal angles may be provided to both the front wheels 14L, 14R and the rear wheels 16L, 16R. Additionally, each wheel 14L, 14R, 16L, 16R may be independently steered. Sensors may be provided within the vehicle 10 for measuring vehicle movement such as yaw speed, longitudinal velocity and acceleration, and steering angles for selecting optimal steering angles.

When the linear translation Vₓ, V_{y} is minimal and stability is of little concern, the independently steered rear wheels 16L, 16R may be steered in an opposite steering direction relative to the steering of the front wheels 14L, 14R for minimizing a turn radius of the vehicle 10. Thus, the vehicle 10 is also be provided with an all wheel, opposed steering mode.

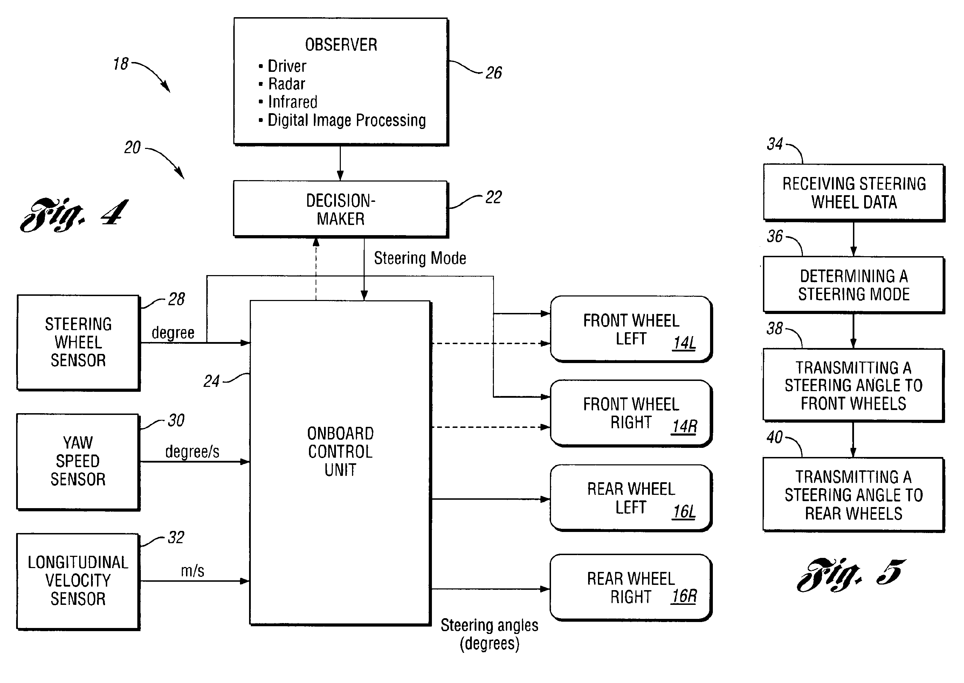

With reference now to Figure 4, a steering system 18 is illustrated for steering the front and rear wheels 14L, 14R, 16L, 16R of the vehicle 10. The steering system 18 includes a controller 20 with a decision-maker 22 for selecting the steering mode and an onboard control unit 24 for controlling the steering of the wheels 14L, 14R, 16L, 16R. The controller 20 may be provided by a single processor, or may be provided by individual processors for the decision-maker 22 and the onboard control unit 24.

The vehicle 10 or the driver determines what steering mode should be selected. In a front wheel steer mode, the selection of an all wheel steer mode may be required before a parallel steering movement or an opposed steering movement of the vehicle 10 can be made. Therefore, the controller 20 includes an observer 26 and the decision-maker 22 for selecting the steering mode in advance. The observer 26 may be the driver utilizing human senses and determining that parallel movement or opposed wheel movement is required. The vehicle 10 may utilize sensors such as radar, infrared technology, digital image processing or the like. Such vehicle sensors may identify a given probability that parallel movement or opposed steering movement is required.

If the driver is the observer 26, the driver can select the steering mode manually by manual actuation of a button, knob or the like provided within a passenger compartment of the vehicle 10. Accordingly, the driver, as the observer 26, may manually select the mode through the decision-maker 22.

Alternatively, the vehicle 10 may be the decision-maker 22 by receiving external data from the vehicle observer 26, related to positional data. Thus, the vehicle decision-maker 22 may select the steering mode. Once the steering mode is selected, the decision-maker 22 inputs the steering mode to the onboard control unit 24.

The steering system 18 may include sensors for sensing other input that may be processed by the onboard control unit 24. Accordingly, a steering wheel sensor 28 may be provided for measuring an angular orientation of a manual steering wheel and inputting the measurement in degrees to the onboard control unit 24. The onboard control unit 24 may utilize the angle of the steering wheel sensor 28 for determining a direction in which the driver intends to steer the vehicle 10.

Accordingly, the onboard control unit 24 may utilize the steering wheel sensor data for actuating the front wheels 14L, 14R in a front wheel steering mode, or actuate all four wheels 14L, 14R, 16L, 16R, in an all wheel steering mode. The onboard control unit 24 may send signals to each of the wheels 14L, 14R, 16L, 16R in a measurement of degrees for actuation of the wheels to the associated steering angles. The actuators for setting the steering angles could be electrical, hydraulic, pneumatic, mechanical or the like.

Additionally, the steering of the front wheels 14L, 14R could be of a conventional type with a mechanical linkage with a steering wheel sensor 28 that directly drives the front wheels 14L, 14R as illustrated by the input arrows from the steering wheel sensor 28 to the front wheels 14L, 14R. In an embodiment with a front wheel steering conventional mechanical linkage, the rear wheels 16L, 16R may be actuated by actuators.

The invention also contemplates a common steering actuator for the rear wheels 16L, 16R. The steering angle for the rear wheels 16L, 16R could be similar or could be varied by mechanical, electrical, hydraulic or pneumatic controls.

A yaw speed sensor 30 may be provided in the steering system 18 for measuring and conveying yaw speed ψ in degrees per second to the onboard control unit 24. A longitudinal velocity sensor 32 may be provided for measuring longitudinal velocity in meters per second and conveying this data to the onboard control unit 24. The onboard control unit 24 may analyze the data from the sensors 28, 30, 32 for providing optimal steering angles to each of the wheels 14L, 14R, 16L, 16R. The data may be analyzed for determining the steering angles based on efficiency, stability, safety or the like.

Additionally, the onboard control unit 24 may convey the data from the steering sensor 28, the yaw speed sensor 30 and the longitudinal velocity sensor 32 to the decision-maker 22. The decision-maker 22 may select the steering mode based on, for example, the steering wheel being turned slightly, such as within a narrow range, wherein large steering wheel angles are required for cornering, larger steering wheel angles are required for opposite steer cornering, and narrow steering angles are required for parallel movement.

Alternatively, the decision-maker 22 may make a steering mode determination based on the yaw speed ψ̇ from the yaw speed sensor 30 that stability is not being optimized, and the decision-maker 22 may select a parallel all wheel steering mode upon the yaw speed sensor 30 measuring a limit within a given range.

Additionally, the decision-maker 22 may determine the steering mode based upon a longitudinal velocity that is measured by the longitudinal velocity sensor 32. For example, the decision-maker 22 may determine that cornering will not occur at certain relatively high speeds and may select the steering mode of all wheel steering for high longitudinal velocities.

The invention also contemplates that the decision-maker 22 may override the driver's steering mode selection based on data received by the vehicle as the observer 26 or data provided by the steering wheel sensor 28, the yaw speed sensor 30 or the longitudinal velocity sensor 32.

The vehicle 10 as the observer 26 may observe external positioning data such as radar, infrared or digital image processing and may record and store such data within the onboard control unit 24 for subsequent access for evaluation of particular operations of the vehicle 10 and for analysis of recorded data after particular manoeuvring has occurred.

With reference now to Figure 5, a non-limiting method for the controller 20 is illustrated. In block 34, the controller 20 receives steering wheel data from the steering wheel sensor 28. In block 36, the controller 20 determines the steering mode, which is conveyed from the decision-maker 22 to the onboard control unit 24. In block 38, a steering angle is transmitted to the front wheels 14L, 14R for performing steering in front wheel and both all wheel steering modes. In block 40, the steering angle is transmitted to the rear wheels 16L, 16R.

In a front wheel steering mode, a steering angle of zero is imparted to the rear wheels 16L, 16R so that the steering is controlled by the front wheels 14L, 14R only. In an all wheel steering mode, non-zero steering angles are imparted to the rear wheels 16L, 16R for adjusting the steering angles of the rear wheels 16L, 16R similar or opposite to the front wheels 14L, 14R for permitting linear movements of the vehicle 10 with reduced rotational movements, such as the movement illustrated in Figure 3, or for reducing the vehicle turning radius.

In summary, a passenger vehicle 10 is disclosed having a steering system 18 that utilizes front wheel and all wheel steering modes for optimizing translation and stability of the vehicle 10. Additionally, various methods are provided for controlling the steering system 18 of the present invention.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set forth in the appended claims.

## Claims

1. A steering system for parallel steering of the front and rear wheels (14L,14R; 16L, 16R) of a passenger vehicle (10) comprising a steering mechanism mounted in a passenger vehicle for receiving manual rotation, a sensor (28) cooperating with the steering mechanism for measuring an angular orientation of the steering mechanism, a controller (24) in communication with the sensor (28) for receiving an input from the sensor (28) indicative of the steering mechanism angular orientation, a front wheel steering actuator in communication with the controller (24) for receiving a steering angle output from the controller (24) for actuating the vehicle front wheels (14L, 14R) to a steering angle corresponding to the steering angle output and a rear wheel steering actuator in communication with the controller (24) for receiving a steering angle output from the controller (24) for actuating the vehicle rear wheels (16L, 16R) to a steering angle corresponding to the steering angle output for parallel steering of the vehicle (10) and for receiving a steering angle output from the controller (24) for actuating the vehicle rear wheels (16L, 16R) to a forward direction for non-parallel steering of the vehicle (10), the system further comprising a steering mode controller (22) for selection of a parallel steering mode in which the steering angle of the vehicle rear wheels (16L, 16R) corresponds to the vehicle front wheels steering angle and a non-parallel steering mode in which the steering angle of the vehicle rear wheels (16L, 16R) are aligned with a forward direction of the vehicle (10), **characterised in that** the system further comprises an observer (26) having at least one of radar equipment, infrared equipment and digital image processing equipment for measuring positional data of external obstacles, which data is input to the steering mode controller (24) for determining the steering mode.

2. A steering system as claimed in claim 1 wherein the system further comprises a rotational velocity sensor (30) operably connected to the controller (24) for measuring a rotational velocity of the vehicle (10) used for determining the steering angle output for the front wheels (14L, 14R) and the rear wheels (161, 16R).

3. A steering system as claimed in claim 1 or in claim 2 wherein the system further comprises a linear velocity sensor (32) operably connected to the controller (24) for measuring a linear velocity of the vehicle (10) used for determining the steering angle output for the front wheels (14L, 14R) and the rear wheels (16L, 16R).

4. A parallel steering passenger vehicle (10) **characterised in that** the vehicle has a steering system (18) as claimed in any one of claims 1 to 3.

## Patentansprüche

1. Lenksystem zur parallelen Lenkung von Vorder- und Hinterrädern (14L, 14R; 16L, 16R) eines Personenkraftwagens (10) mit einem in einem Personenkraftwagen eingebauten Lenkmechanismus zum Empfangen einer manuellen Drehung, einem mit dem Lenkmechanismus zusammenwirkenden Sensor (28) zur Messung einer Winkelausrichtung des Lenkmechanismus, einer mit dem Sensor kommunizierenden Steuerung (24) zum Empfangen eines Eingabewertes vom Sensor (28), welcher die Winkelausrichtung des Lenkmechanismus anzeigt, einem Vorderrad-Lenk-Stellantrieb in Verbindung mit der Steuerung (24) zum Empfangen einer Lenkwinkel-Ausgabe von der Steuerung (24) zum Einstellen der Vorderräder (14L, 14R) des Fahrzeuges auf einen Lenkwinkel, welcher der Lenkwinkel-Ausgabe entspricht, und einem Hinterrad-Lenk-Stellantrieb in Verbindung mit der Steuerung (24) zum Empfangen einer Lenkwinkel-Ausgabe von der Steuerung (24) zum Verstellen der Hinterräder (16L, 16R) des Fahrzeuges auf einen Lenkwinkel, welcher der Lenkwinkel-Ausgabe entspricht, so daß das Fahrzeug (10) parallel gelenkt wird, und zum Empfangen einer Lenkwinkel-Ausgabe von der Steuerung (24) zum Einstellen der Hinterräder (16L, 16R) des Fahrzeuges in eine Geradeaus-Stellung, so daß das Fahrzeug (10) nicht-parallel gelenkt wird, wobei das System des weiteren eine Lenkbetriebsart-Steuerung (22) umfaßt, zur Wahl einer Parallel-Lenkbetriebsart, in welcher der Lenkwinkel der Hinterräder (16L, 16R) des Fahrzeuges dem Lenkwinkel der Vorderräder entspricht, und einer Nicht-Parallel-Lenkbetriebsart, in welcher der Lenkwinkel der Hinterräder (16L, 16R) des Fahrzeuges mit einer Geradeaus-Richtung des Fahrzeuges (10) fluchtet,
**dadurch gekennzeichnet, daß**
das System des weiteren einen Beobachter (26) umfaßt, mit wenigstens einem von einer Radareinrichtung, Infraroteinrichtung oder digitaler Bildverarbeitungseinrichtung zwecks Messung von Positionsdaten von äußeren Hindernissen, welche Daten in die Lenkbetriebsart-Steuerung (24) eingegeben werden, um die Lenkbetriebsart zu bestimmen.

2. Lenksystem nach Anspruch 1,
worin das System des weiteren einen im Betrieb mit der Steuerung (24) verbundenen Drehgeschwindigkeitssensor (30) beinhaltet, zum Messen einer Drehgeschwindigkeit des Fahrzeuges (10), die zur Bestimmung der Lenkwinkel-Ausgabe für die Vorderräder (14L, 14R) und die Hinterräder (16L, 16R) eingesetzt wird.

3. Lenksystem nach Anspruch 1 oder Anspruch 2,
worin das System des weiteren einen im Betrieb mit der Steuerung (24) verbundenen Lineargeschwindigkeitssensor (32) beinhaltet, zum Messen einer Lineargeschwindigkeit des Fahrzeuges (10), die zur Bestimmung der Lenkwinkel-Ausgabe für die Vorderräder (14L, 14R) und die Hinterräder (16L, 16R) eingesetzt wird.

4. Personenkraftfahrzeug (10) mit Parallellenkung,
**dadurch gekennzeichnet, daß** das Fahrzeug ein Lenksystem (18) nach einem der Ansprüche 1 bis 3 aufweist.

## Revendications

1. Système de direction destiné à braquer en parallèle les roues avant et arrière (14L, 14R ; 16L, 16R) d'un véhicule de tourisme (10) comprenant un mécanisme de direction monté dans le véhicule de tourisme, destiné à recevoir une rotation manuelle, un capteur (28) coopérant avec le mécanisme de direction en vue de mesurer une orientation angulaire du mécanisme de direction, un dispositif de commande (24) en communication avec le capteur (28) destiné à recevoir une entrée du capteur (28) indicative de l'orientation angulaire du mécanisme de direction, un actionneur de braquage de roues avant en communication avec le dispositif de commande (24) destiné à recevoir une sortie d'angle de braquage du dispositif de commande (24) en vue d'actionner les roues avant (14L, 14R) du véhicule suivant un angle de braquage correspondant à la sortie d'angle de braquage et un actionneur de braquage de roues arrière en communication avec le dispositif de commande (24) en vue de recevoir une sortie d'angle de braquage du dispositif de commande (24) pour actionner les roues arrière (16L, 16R) du véhicule suivant un angle de braquage correspondant à la sortie d'angle de braquage pour un braquage parallèle du véhicule (10) et pour recevoir une sortie d'angle de braquage du dispositif de commande (24) en vue d'actionner les roues arrière (16L, 16R) du véhicule suivant une direction vers l'avant pour une orientation non parallèle du véhicule (10), le système comprenant en outre un dispositif de commande de mode de braquage (22) pour une sélection d'un mode de braquage en parallèle dans lequel l'angle de braquage des roues arrière (16L, 16R) du véhicule correspond à l'angle de braquage des roues avant du véhicule et d'un mode de braquage non parallèle dans lequel l'angle de braquage des roues arrière (16L, 16R) du véhicule est aligné avec une direction vers l'avant du véhicule (10), **caractérisé en ce que** le système comprend en outre un dispositif d'observation (26) comportant au moins l'un d'un équipement radar, d'un équipement à infrarouge et d'un équipement de traitement d'images numériques destiné à mesurer les données de position d'obstacles externes, lesquelles données sont appliquées en entrée au dispositif de commande de mode de braquage (24) destiné à déterminer le mode de braquage.

2. Système de direction selon la revendication 1, dans lequel le système comprend en outre un capteur de vitesse de rotation (30) connecté fonctionnellement au dispositif de commande (24) destiné à mesurer une vitesse de rotation du véhicule (10) utilisée pour déterminer la sortie d'angle de braquage pour les roues avant (14L, 14R) et les roues arrière (16L, 16R).

3. Système de direction selon la revendication 1 ou la revendication 2, dans lequel le système comprend en outre un capteur de vitesse linéaire (32) connecté fonctionnellement au dispositif de commande (24) pour mesurer une vitesse linéaire du véhicule (10) utilisée pour déterminer la sortie d'angle de braquage pour les roues avant (14L, 14R) et les roues arrière (16L, 16R).

4. Véhicule de tourisme à direction parallèle (10) **caractérisé en ce que** le véhicule comporte un système de direction (18) selon l'une quelconque des revendications 1 à 3.
